(19) Europäisches Patentamt
European Patent Office
Office européen des brevets

(11) Numéro de publication: **0 322 058 B1**

(12) **FASCICULE DE BREVET EUROPEEN**

(45) Date de publication de fascicule du brevet: **29.09.93**

(51) Int. Cl.$^5$: **H04N 11/04**

(21) Numéro de dépôt: **88202938.2**

(22) Date de dépôt: **19.12.88**

# (54) Dispositif de régulation de débit conjointe à au moins deux composantes de signaux vidéo numériques.

(30) Priorité: **23.12.87 FR 8718046**

(43) Date de publication de la demande:
**28.06.89 Bulletin 89/26**

(45) Mention de la délivrance du brevet:
**29.09.93 Bulletin 93/39**

(84) Etats contractants désignés:
**AT DE FR GB SE**

(56) Documents cités:
**EP-A- 0 189 703**
**EP-A- 0 248 729**
**US-A- 4 394 774**

(73) Titulaire: **PHILIPS ELECTRONIOUE GRAND PUBLIC**
**51, Rue Carnot**
**F-92150 Suresnes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB SE AT**

(72) Inventeur: **Modarresse, François Société Civile S.P.I.D.**
**209 rue de l'Université**
**F-75007 Paris(FR)**

(74) Mandataire: **Landousy, Christian et al**
**Société Civile S.P.I.D. 156, Boulevard Haussmann**
**F-75008 Paris (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3. 10/3.6/3.3. 1)

## Description

La présente invention concerne un dispositif de régulation de débit conjointe à au moins deux composantes de signaux vidéo numériques, comprenant un circuit de transformation orthogonale qui reçoit lesdits signaux numériques représentatifs d'un certain nombre de points d'une image divisée en blocs, un circuit de conversion de balayage qui transforme la suite bidimensionnelle des valeurs des coefficients $F_i$-(u,v) de sortie du circuit de transformation orthogonale en une suite monodimensionnelle, un circuit de normalisation, un circuit de quantification par conversion en une valeur entière, un circuit de codage des valeurs quantifiées, et une mémoire-tampon de débit qui reçoit selon un débit variable les valeurs codées et, d'une part, renvoie une valeur de norme moyenne liée audit débit vers le circuit de normalisation, d'autre part délivre des valeurs à débit constant sur la sortie du dispositif de régulation, un circuit à retard étant éventuellement prévu par exemple entre lesdits circuits de transformation orthogonale et de conversion de balayage. Cette invention est applicable notamment dans le domaine de la transmission des signaux de télévision, ainsi que dans celui de l'enregistrement et/ou de la mémorisation de tels signaux.

La numérisation des signaux de télévision, en vue de leur transmission ou de leur enregistrement, est une solution extrêmement utile dans le cas de liaisons où le bruit perturbateur est particulièrement important, les liaisons par satellite notamment. Une image de télévision contient cependant une très grande quantité d'informations, dont la représentation numérique se traduit par un débit élevé. En échantillonnant les composantes du signal de télévision à une fréquence satisfaisant la condition de Shannon et en opérant une quantification uniforme en 256 niveaux, la numérisation directe des composantes de luminance et de chrominance aux fréquences de 13,5 et de 6,75 mégahertz respectivement, imposées par les normes, conduirait en effet à un débit de 216 Meb/s. Ce débit est tout à fait prohibitif, notamment dans le cas de dispositifs d'enregistrement magnétique grand public. L'emploi de techniques de réduction de débit est donc nécessaire, et d'autant plus réalisable qu'une redondance relativement importante existe dans l'image.

Le brevet des Etats-Unis d'Amérique US-A-4 394 774 décrit un dispositif de régulation de débit qui opère par codage des signaux vidéo à la suite d'une transformation orthogonale. Chaque image est découpée en blocs de taille déterminée, puis ladite transformation orthogonale est appliquée à chaque bloc. Les coefficients issus de cette transformation sont alors divisés par un facteur de normalisation, puis quantifiés et codés. Un tel dispositif ne tient cependant pas compte des différences de propriétés statistiques des signaux vidéo localement pour adapter certains paramètres du codage à ces propriétés locales.

Le but de l'invention est de proposer un dispositif de régulation du débit de signaux vidéo numériques qui remédie à un tel inconvénient.

A cet effet, l'invention concerne un dispositif caractérisé en ce que ledit circuit de normalisation comprend lui-même :

(a) un circuit de calcul du rapport rap(acti) entre l'activité d'une première composante notée $P_1$ et l'activité d'une deuxième composante notée $P_2$, l'activité étant une grandeur égale, pour chaque composante, à la somme des coefficients obtenus dans la suite monodimensionnelle, exception faite du premier coefficient, et cette grandeur étant calculée pour chaque composante par connexion de l'entrée dudit circuit de calcul de rap(acti) en sortie du circuit de conversion de balayage ou du circuit de quantification ;

(b) un circuit de calcul, à partir de rap(acti), du rapport rap(norme) entre la norme de régulation de débit relative à la deuxième composante et celle relative à la première composante, chacune desdites normes étant inversement proportionnelle au débit selon des relations

norme x débit = K où K est une constante ;

(c) un circuit de calcul, selon les formules suivantes :

$$\text{norme } (P_1) = \frac{1 + \text{rap(norme)}}{\text{rap(norme)}} \times \text{norme globale}$$

norme ($P_2$) = (1 + rap(norme)) x norme globale

norme globale x débit global = K,

des normes spécifiques norme ($P_1$) et norme ($P_2$) relatives respectivement à la première composante et à la deuxième composante, recevant d'une part ladite valeur de rap(norme) et d'autre part une valeur de norme globale délivrée par un circuit de calcul de norme globale ;

(d) un compteur du nombre d'éléments binaires présents dans la mémoire-tampon pour le bloc courant en cours de traitement ;

(e) une mémoire auxiliaire de stockage temporaire dudit nombre d'éléments binaires ;

(f) un soustracteur déterminant avec son signe la différence du nombre d'éléments binaires entre l'entrée et la sortie de ladite mémoire auxiliaire ;

(g) le circuit de calcul de norme globale, recevant d'une part la sortie dudit soustracteur et d'autre part la sortie du compteur et délivrant une valeur de norme globale telle que définie en (c) et destinée à l'une des entrées du circuit de calcul de normes spécifiques ;

(h) un diviseur de la sortie du circuit de conversion de balayage par la sortie dudit circuit de calcul de normes spécifiques, la sortie de ce diviseur constituant la sortie du circuit de normalisation fournie au circuit de quantification.

Dans un premier mode de réalisation de l'invention, les première et deuxième composantes sont les signaux de différence de couleur qui constituent la composante de chrominance d'un signal de télévision. Dans un second mode de réalisation, ces première et deuxième composantes sont les composantes de luminance et de chrominance d'un signal de télévision.

L'invention concerne aussi un étage de réception pour un système de transmission, ledit étage comprenant une mémoire-tampon qu reçoit des signaux d'entrée à débit constant et délivre des signaux à débit variable, un circuit de décodage de ces signaux, un circuit de quantification inverse des signaux décodés, un circuit de normalisation inverse, un circuit de conversion de balayage, et un circuit de transformation orthogonale inverse, un circuit à retard étant éventuellement prévu par exemple entre lesdits circuits de conversion de balayage et de transformation orthogonale inverse. Selon l'invention, cet étage de réception est en outre caractérisé en ce que ledit circuit de normalisation inverse comprend lui-même :

(a) un circuit de calcul du rapport rap(acti) entre l'activité de la première composante et l'activité de la deuxième composante, ces valeurs d'activité étant calculées pour chaque composante pour constituer l'entrée dudit circuit de calcul de rap(acti) par prélèvement soit de l'entrée du circuit de conversion de balayage, soit de l'entrée du circuit de quantification inverse ;

(b) un circuit de calcul, à partir de rap(acti), du rapport rap(norme) entre la norme de régulation de débit relative à la deuxième composante et celle relative à la première composante, chacune desdites normes étant inversement proportionnelle au débit selon des relations norme x débit = K où K est une constante ;

(c) un circuit de calcul, selon les formules suivantes :

$$\text{norme } (P_1) = \frac{1 + \text{rap(norme)}}{\text{rap(norme)}} \text{ x norme globale}$$

norme ($P_2$) = (1 + rap(norme)) x norme globale
norme globale x débit global = K,

des normes spécifiques norme ($P_1$) et norme ($P_2$) relatives respectivement à la première composante et à la deuxième composante, recevant d'une part ladite valeur de rap(norme) et d'autre part une valeur de norme globale délivrée par un circuit de calcul de norme globale ;

(d) un compteur du nombre d'éléments binaires présents dans la mémoire-tampon pour le bloc courant en cours de traitement ;

(e) une mémoire auxiliaire de stockage temporaire dudit nombre d'éléments binaires ;

(f) un soustracteur déterminant avec son signe la différence du nombre d'éléments binaires entre l'entrée et la sortie de ladite mémoire auxiliaire ;

(g) le circuit de calcul de norme globale, recevant d'une part la sortie dudit soustracteur et d'autre part la sortie du compteur et délivrant une valeur de norme globale telle que définie en (c) et destinée à l'une des entrées du circuit de calcul de normes spécifiques ;

(h) un multiplicateur de la sortie du circuit de quantification inverse par la sortie dudit circuit de calcul de normes spécifiques, la sortie de ce multiplicateur constituant la sortie du circuit de normalisation fournie au circuit de conversion de balayage.

A l'émission comme à la réception, un circuit de filtrage récursif passe-bas de la norme peut être prévu entre la sortie du circuit de calcul de rap(norme) et l'entrée corrspondante du circuit de calcul des normes spécifiques.

Les particularités de l'invention apparaîtront defaçon plus détaillée dans la description qui suit et dans les dessins annexés, donnés à titre d'exemples non limitatifs et dans lesquels :

- la figure 1 montre un exemple de réalisation du dispositif de régulation de débit selon l'invention ;
- la figure 2a montre une image divisée en M x N blocs, la figure 2b représente la matrice bidimensionnelle des coefficients de transformation d'un de ces blocs d'images, et la figure 2c met en évidence un exemple de type de parcours monodimensionnel pour la lecture et le traitement desdits coefficients ;
- la figure 3 montre un exemple de réalisation du dispositif de restitution de signaux qui, dans l'étage de réception, correspond au dispositif de régulation de débit de la figure 1.

Dans l'exemple de réalisation représenté sur la figure 1, le dispositif selon l'invention comprend d'abord un circuit de transformation orthogonale qui est par exemple un circuit de transformation en cosinus discret 10. Ce circuit 10 reçoit une suite de signaux numériques représentant sous la forme d'une matrice de valeurs la chrominance d'un certain nombre de points ou éléments d'une image divisée en blocs, et délivre pour chaque bloc une suite bidimensionnelle de coefficients $F_i(u,v)$. La figure 2a montre une telle image, divisée en M x N blocs. La transformation en cosinus discret est une opération connue, et l'expression de ces coefficients de transformation obtenus successivement pour chaque bloc ne sera donc pas donnée ici. On rappellera simplement que de nombreuses mesures statistiques ont permis de montrer la très forte corrélation entre points voisins d'une trame ou d'une image, et que l'objet de la transformation est d'obtenir un ensemble de coefficients plus indépendants que les valeurs disponibles avant transformation.

Les coefficients $F_i(u,v)$ sont alors fournis, ici par l'intermédiaire d'un circuit à retard 20, à un circuit de conversion de balayage 30 destiné à convertir la suite bidimensionnelle de valeurs $F_i(u,v)$ en une suite monodimensionnelle. Le circuit à retard 20 sert à mémoriser un ou plusieurs blocs de l'une des composantes, notées ici $P_1$ et $P_2$, lorsque les deux composantes ne sont pas disponibles simultanément. Pour un bloc tel que celui de la figure 2b, correspondant lui-même à celui indiqué avec des hachures sur la figure 2a, la suite monodimensionnelle peut être par exemple une suite en zig-zag comme celle indiquée sur la figure 2c, qui montre, dans une représentation de la matrice bidimensionnelle des coefficients de transformation du bloc d'image, un exemple de type de parcours définissant -de façon non limitative bien entendu- un ordre de lecture et de traitement des coefficients ($C_1$, $C_2$, $C_3$,...etc...). Ce type de parcours présente l'avantage suivant, à savoir qu'il permet d'aborder ultérieurement l'opération de codage des signaux vidéo en présentant de longues plages de valeurs nulles, ce qui contribue à réduire la quantité d'informations à transmettre. Cette suite monodimensionnelle pourrait cependant être constituée sur la base d'un autre critère, sans pour autant sortir du cadre de l'invention, ou même être déterminée de façon adaptative en fonction de caractéristiques mesurées sur le signal lui-même, ou encore être constituée par lecture successive dans différents blocs spatialement voisins.

Un circuit de normalisation 40, décrit plus en détail plus loin, reçoit alors cette suite monodimensionnelle. La sortie du circuit 40, normalisée, est alors quantifiée dans le circuit de quantification 50 puis codée dans le circuit de codage 60. La sortie de ce circuit de codage 60 est reliée à l'entrée d'une mémoire-tampon 70 qui reçoit selon un débit variable les valeurs codées et les restitue sur sa sortie principale S avec un débit constant. Cette sortie principale constitue la sortie du dispositif de régulation de débit selon l'invention.

L'opération de quantification permet de convertir la valeur normalisée de chaque coefficient, exprimée avec une virgule flottante, en une valeur entière, par exemple soit par simple arrondi, soit de préférence par troncature en prenant la partie entière de la valeur avant quantification, et ces opérations pouvant en outre être éventuellement combinées à une compression ou une expansion de l'échelle des valeurs. Soumises à une telle quantification, un certain nombre de valeurs comprises entre 0 et 1 sont remplacées par la valeur 0, ce qui diminue le nombre de coefficients significatifs à transmettre au circuit de codage et va donc dans le sens de la réduction de débit recherchée. L'opération de codage est ici réalisée à l'aide de tables de valeurs codées selon un code de Huffman, pour le codage soit de valeurs de coefficients (codage à longueur variable), soit de longueurs de plages (codage par plages).

Le circuit de normalisation 40 va être maintenant décrit plus en détail. Pour adapter le débit aux propriétés locales de l'image, il a fallu rechercher une fonction reliant l'activité d'un bloc au nombre d'éléments binaires nécessaires pour assurer le codage de ce bloc (l'activité traduit la nature du contenu spectral du bloc et, plus précisément, la plus ou moins grande importance, dans ce contenu, des hautes fréquences spatiales et est donc par exemple faible pour un bloc quasi-uniforme, ou au contraire d'autant plus élevée que le bloc contient plus de contours et que ces contours sont plus raides).

Les essais effectués ont conduit à sélectionner comme expression de cette activité l'expression (1), donnée en annexe de la présente description, expression dans laquelle $C_i$ est, à l'intérieur du bloc considéré, le i-ième coefficient de la suite monodimensionnelle délivrée par le circuit de conversion de

balayage 30 (l'expression (1) ainsi que les expressions citées éventuellement dans la suite de la présente description sont toutes reportées dans ladite annexe). Le premier coefficient, $C_1$, n'est pas utilisé, car il correspond à l'amplitude moyenne du bloc et ne fournit aucun renseignement sur le contenu spectral du bloc. Sa valeur est indépendante du débit, car on le code d'une manière particulière, avec un nombre constant de bits, huit ou neuf bits par exemple, pour éviter des interprétations erronées qui conduiraient à des changements de couleurs ou de niveaux de gris.

Par la suite, on va considérer d'abord l'exemple d'une régulation conjointe aux deux composantes de chrominance U et V, puis l'application du même principe à la luminance et à la chrominance, c'est-à-dire en fait aux trois composantes d'un signal vidéo.

Ayant défini une expression de l'activité, on dispose donc de deux expressions (2) et (3) qui, dans le premier exemple où le signal vidéo numérique traité est une composante de chrominance, définissent l'activité pour chacune des deux composantes U et V (les signaux de différence de couleur, appelés également $D_R$ et $D_B$ selon les standards SECAM et MAC), et l'on cherche alors la corrélation entre d'une part ces activités acti($D_R$) et acti($D_B$) et d'autre part la quantité d'informations présente en sortie de la mémoire-tampon 70. On va pour cela s'intéresser non pas aux valeurs elles-mêmes de ces activités, mais à leur rapport rap(acti) donné par l'expression (4). En effet, compte tenu du débit total autorisé en sortie, il est surtout intéressant de savoir quelle proportion de ce débit total est allouée à chaque composante.

On sait par ailleurs que c'est la grandeur appelée norme qui est utilisée pour la régulation du débit et que le produit de la norme et du débit, appliqué à un coefficient déterminé, par exemple au 32ème coefficient qui correspond sensiblement au milieu du spectre, est constant, ce qu'expriment les relations (5) et (6) dans lesquelles $K_R$ et $K_B$ sont des constantes. Là encore, on va s'intéresser non pas à la norme elle-même, mais au rapport des normes, rap(norme), donné par l'expression (7). La détermination des normes équivalant à celle des débits, on va donc finalement rechercher quelle est la fonction f exprimant la relation (8) entre rap(norme) et rap(acti), ou plus précisément la relation (9) entre rap(norme) et les activités respectives acti($D_R$) et acti($D_B$) des composantes $D_R$ et $D_B$.

Il est connu que l'acuité de l'oeil humain est nettement plus grande dans le rouge que dans le bleu. Cela permet de tolérer plus de défauts de codage pour la composante $D_B$ que pour la composante $D_R$ en matière de débit. Les tests entrepris et les essais de régulation ont finalement conduit, pour des niveaux d'activité comparables entre les deux composantes $D_R$ et $D_B$, à fixer le rapport des normes à la valeur 2,5 environ, comme l'exprime la relation (10) pour une valeur de rap(acti) à peu près égale à 1.

Un exemple de fonction f satisfaisante est alors, notamment, la droite qui passe d'une part par le point (1, f(1)) défini ci-dessus pour rap(acti) égal à 1 et d'autre part par le point (0, f(0)) correspondant à une activité nulle pour $D_R$. En effet, dans ce cas d'activité nulle, une certaine proportion de débit doit quand même être réservée en vue du codage systématique du coefficient continu (le premier coefficient non utilisé, comme indiqué plus haut) et de l'indication de fin de bloc (ici des deux mots de fin de bloc).

La régulation de débit est effectuée après le codage d'un certain nombre de blocs correspondant à la composante $D_R$ et d'un certain nombre de blocs correspondant à la composante $D_B$, dans le cas présent après le codage d'un seul bloc $D_R$ et d'un seul bloc $D_B$, sans que ce choix soit limitatif. Une norme globale est calculée en fonction du taux de remplissage de la mémoire-tampon 70 et de la variation de ce taux. En tenant alors compte de la constance du produit de la norme globale et du débit, exprimée par la relation (11), et des expressions (5) et (6) des normes relatives à chaque composante $D_R$ et $D_B$, l'expression définitive de ces normes prend la forme définie par les relations (12) et (13).

Le calcul permettant d'aboutir aux formules (12) et (13) peut être détaillé comme suit. Sachant que la norme globale est déterminée de façon à vérifier la relation (11), on cherche à obtenir deux normes spécifiques, respectivement norme ($D_R$) et norme ($D_B$), vérifiant les égalités (5) et (6) mais, en plus, la relation (14). Comme le débit global est la somme des débits relatifs à $D_R$ et à $D_B$, et connaissant les égalités (5), (6), (11) et (14), il vient les égalités (15), (16), et (17). En remplaçant ces termes dans l'égalité (18), on obtient évidement l'égalité (19), ce qui donne, en simplifiant par K, puis en effectuant l'addition et en prenant l'inverse des deux membres de l'égalité, l'expression (20). En mettant norme ($D_R$) en facteur puis en simplifiant par ce même terme, et enfin en multipliant les deux côtés de l'égalité par (1 + rap-(norme)), on obtient l'expression (12). En remplaçant norme($D_B$) par sa valeur dans une des égalités (par exemple dans (20)), on obtient l'expression (13). De ces dernières expressions, il découle évidemment les expressions (21) et (22), qui sont en fait les relations les plus intéressantes.

Cette présentation générale des fonctions réalisées par le dispositif selon l'invention étant effectuée, on est maintenant effectivement en mesure de préciser le contenu du circuit de normalisation 40. Ce circuit 40 comprend d'abord un circuit 401 de calcul de rap(acti) à partir des activités acti($D_R$) et acti($D_B$) de chacune des deux composantes $D_R$ et $D_B$, ce circuit 401 étant prévu en sortie du circuit de conversion de balayage 30. En sortie du circuit 401, un circuit 402 de calcul de rap(norme) calcule alors cette dernière grandeur à

l'aide de l'expression (8) et à partir de l'hypothèse retenue (de façon non limitative) quant au choix de la fonction f. Ce circuit 402 est ici suivi d'un circuit 403 de filtrage récursif passe-bas. La valeur de rap(norme) ainsi lissée est fournie à un circuit 404 de calcul des normes spécifiques, c'est-à-dire de norme ($D_R$) et de norme ($D_B$) selon les expressions (12) et (13) respectivement. Un diviseur 405 assure enfin la division de la sortie du circuit de conversion de balayage 30 par norme($D_R$) ou par norme($D_B$) selon la nature de la composante en cours de codage (bloc $D_R$ ou bloc $D_B$, comme on l'a précisé ci-dessus).

Le calcul des normes spécifiques norme($D_R$) et norme($D_B$) effectué par le circuit 404 implique que ce circuit reçoive, conformément aux expressions (12) et (13), non seulement la valeur de rap(norme) mais aussi celle de la norme globale. Cette norme globale est fournie par un circuit 406 de calcul de norme globale selon le processus suivant.

Un compteur 407 prévu en sortie de la mémoire-tampon 70 donne le nombre exact d'éléments binaires présents dans cette mémoire pour le bloc courant en cours de traitement, et une mémoire auxiliaire 408 stocke temporairement ce nombre d'éléments binaires qui, lors du traitement du bloc suivant devenu le bloc courant, représentera bien entendu le nombre d'éléments binaires du bloc devenu le bloc précédent. Un soustracteur 409 détermine alors, avec son signe, la différence entre l'entrée et la sortie de ladite mémoire auxiliaire 408, c'est-à-dire la différence du nombre d'éléments binaires entre deux blocs successifs, et fournit cette différence au circuit de calcul de norme globale 406. Ce circuit 406 reçoit également, sur une autre connexion d'entrée le nombre d'éléments binaires du bloc courant, fourni par le compteur 407, et délivre en sortie, pour envoi vers le circuit de calcul des normes spécifiques 404, la valeur modifiée, en plus ou en moins, de la norme globale.

Pour l'écriture et la lecture de la mémoire-tampon 70, cette dernière comporte respectivement une première connexion d'entrée 701 reliée à la sortie du circuit de codage 60 et commandant à la fois l'écriture en mémoire et l'incrémentation du compteur 407, et une deuxième connexion d'entrée 702, reliée elle à un circuit d'horloge 410 définissant une cadence fixe (ici, par exemple, 1 Mbit/seconde mais des essais satisfaisants ont été réalisés également avec des cadences supérieures ou inférieures) pour assurer un débit constant. Ce circuit d'horloge 410 commande donc le vidage de la mémoire-tampon 70, ainsi que la décrémentation du compteur 407.

Bien entendu, la présente invention n'est pas limitée à l'exemple de réalisation ci-dessus décrit et représenté, à partir duquel des variantes, dont celles qui ont déjà été évoquées, peuvent être proposées sans pour cela sortir du cadre de l'invention.

On a déjà mentionné, en particulier, que l'invention ne pouvait pas être limitée par le type de parcours retenu pour la lecture de la matrice bidimensionnelle descoefficients de transformation de chaque bloc d'image. Quels que soient ce parcours et le ou les avantages spécifiques plus ou moins marqués qui en résultent, la normalisation peut être effectuée selon les principes exposés en détail précédemment. Le type de parcours adopté a une influence essentiellement sur le codage, et de la nature du codage dépendent évidemment la quantité d'informations qui sort du circuit de codage et donc le débit et la norme globale, mais sans que cela modifie le mode de mise en oeuvre de l'invention ni n'en diminue l'intérêt.

On a vu, également, que les activités respectives des blocs $D_R$ et des blocs $D_B$ étaient déterminées, par le circuit 401, à partir des informations disponibles en sortie du circuit de conversion de balayage 30, c'est-à-dire à partir des coefficients avant normalisation et quantification. Or une partie importante de l'énergie attachée à un bloc est perdue à la suite de ces opérations de normalisation et de quantification. Cela signifie que le même calcul effectué à la réception ne donnera pas une valeur identique pour l'activité de chaque bloc, et il peut en résulter des déterminations inexactes de la norme et l'apparition de fausses couleurs au décodage.

Cet inconvénient, limité par le fait qu'on utilise en fait non pas les activités mais leur rapport rap(acti), peut quand même être réduit en opérant non plus à partir des informations de sortie du circuit 30, mais à partir des coefficients après normalisation et quantification. C'est en fait cette disposition préférentielle qui a été retenue et qui est représentée en trait continu sur la figure 1, la solution de la prise des données en sortie du convertisseur de balayage 30 n'étant représentée qu'en trait discontinu. En procédant ainsi, on privilégie, certes, lors de l'évaluation de rap(acti), les termes de basse fréquence, mais en général c'est justement à l'activité dans ce domaine des basses fréquences spatiales que l'on s'intéresse de façon prédominante, puisque ces dernières doivent être codées avec plus de soin.

Il faut cependant noter que l'activité ainsi définie ne possède plus une aussi bonne corrélation avec le débit, ce qui constituait pourtant le critère initial pour la définition d'une expression satisfaisante de l'activité. Il en résulte donc un rapport moins bon entre les variations du débit et les valeurs respectives des normes et un risque d'une certaine dérive pour le taux de remplissage de la mémoire-tampon 70. A cet inconvénient, on peut remédier, comme indiqué sur la figure 1, par la mise en place, entre la sortie du circuit 402 de calcul de rap(norme) et l'entrée correspondante du circuit 404 de calcul des normes

spécifiques, du circuit 403 de filtrage récursif passe-bas de la norme. L'inertie ainsi conférée au dispositif permet de confiner les paramètres des opérations dans un intervalle relativement petit autour de leur valeur moyenne et donc de limiter cette dérive.

Une régulation conjointe du débit des composantes $D_R$ et $D_B$ de la chrominance a été décrite précédemment. Le même principe et la même mise en oeuvre sont utilisables si l'on veut opérer une régulation de débit conjointe à la chrominance et à la luminance. Il suffit en effet de remplacer, dans la description qui précède, la composante $D_R$ par la luminance Y et la composante $D_B$ par la chrominance C, et, dans la relation (10), d'adapter la valeur de rap(norme) pour rap(acti) = 1 à cette nouvelle application, en prenant par exemple f(1) = 4, rapport le plus couramment retenu entre les débits respectifs de la luminance et de la chrominance (les deux composantes de chrominance sont, elles, régulées conjointement comme on l'a décrit précédemment). Le schéma du dispositif de régulation conjointe est, par conséquent, rigoureusement identique à celui de la figure 1.

Dans l'une ou l'autre des applications (régulation $D_R/D_B$, régulation luminance/chrominance) qui viennent d'être décrites, l'invention n'est pas limitée au dispositif de mise en oeuvre, à l'émission, d'une telle régulation, mais s'étend au système de transmission d'images de télévision qui inclut au moins un tel dispositif. Par transmission, on entend toujours ici, bien entendu, la transmission proprement dite des signaux, mais aussi leur enregistrement ou leur mémorisation. L'invention s'étend également à tout étage d'émission qui, dans un tel système de transmission, comporte la structure décrite en référence à la figure 1, ainsi qu'à tout étage de réception correspondant.

Un tel étage de réception comprend, on le notera, un dispositif de restitution de signaux qui est la réciproque exacte du dispositif de régulation décrit précédemment. Ce dispositif comprend, plus précisément et comme indiqué sur la figure 3, une mémoire-tampon 170 recevant des signaux d'entrée à débit constant et les délivrant à débit variable, un circuit 160 de décodage de ces informations à débit variable, un circuit 150 de quantification inverse des signaux décodés, un circuit de normalisation inverse 140, un circuit de conversion de balayage 130, éventuellement un circuit à retard 120, et un circuit 110 de transformation orthogonale inverse. Le circuit de normalisation inverse 140 est quasi-identique au circuit de normalisation 40, avec remplacement des références 401 à 410 par les références 501 à 510. Seul le diviseur 405 de ce dernier circuit est remplacé, dans le circuit 140, par un multiplicateur 505 de la sortie du circuit de quantification inverse 150 par la sortie du circuit 504 de calcul des normes spécifiques. Bien entendu, comme précédemment sur la figure 1, les signaux d'entrée du circuit 501 de calcul de rap(acti) peuvent être prélevés soit à l'entrée du circuit de conversion de balayage 130 (connexion en trait discontinu sur la figure 3), soit à l'entrée du circuit de quantification inverse 150 (sur cette même figure 3, connexion en trait continu), cette dernière solution étant de préférence retenue.

## -ANNEXE-

(1) $\sum_{i \geq 2} |C_i|$

(2) $\text{acti}(D_R) = (\sum_{i \geq 2} C_i)_{DR}$

(3) $\text{acti}(D_B) = (\sum_{i \geq 2} C_i)_{DB}$

(4) $\text{rap(acti)} = \dfrac{\text{acti}(D_R)}{\text{acti}(D_B)} = h\ (\text{acti}(D_R),\ \text{acti}(D_B))$

(5) $\text{norme}(D_R)_{32} \times \text{débit}(D_R) = K_R$

(6) $\text{norme}(D_B)_{32} \times \text{débit}(D_B) = K_B$

(7) $\text{rap(norme)} = \dfrac{\text{norme}(D_B)}{\text{norme}(D_R)} = g(\text{norme}(D_R),\ \text{norme}(D_B))$

(8) $\text{rap(norme)} = f(\text{rap(acti)})$

(9) $\text{rap(norme)}=f[h(\text{acti}(D_R),\text{acti}(D_B))]=g(\text{norme}(D_R),\text{norme}(D_B))$

(10) $(\text{rap(norme)})_{\text{pour rap(acti)} = 1} = f(1) = 2{,}5$

(11) norme globale x débit global = K = constante

(12) $\text{norme}(D_R) = \dfrac{1 + \text{rap(norme)}}{\text{rap(norme)}} \times \text{norme globale}$

(13) $\text{norme}(D_B) = (1+\text{rap(norme)}) \times \text{norme globale}$

(14) $K_R = K_B = K$

(15) $\dfrac{K}{\text{norme globale}} = \text{débit global}$

$$(16) \quad \frac{K}{\text{norme } (D_R)} = \text{débit}(D_R)$$

$$(17) \quad \frac{K}{\text{norme } (D_B)} = \text{débit}(D_B)$$

$$(18) \quad \text{débit global} = \text{débit}(D_R) + \text{débit}(D_B)$$

$$(19) \quad \frac{K}{\text{norme globale}} = \frac{K}{\text{norme}(D_R)} + \frac{K}{\text{norme}(D_B)}$$

$$(20) \quad \text{norme globale} = \frac{\text{norme}(D_R) \text{ x norme}(D_B)}{\text{norme}(D_R) + \text{norme}(D_B)}$$

$$(21) \quad \text{norme}(D_B) = \text{norme globale x } (1 + f(\text{rap}(\text{acti})))$$

$$(22) \quad \text{norme}(D_R) = \text{norme globale x } \left(\frac{1 + f(\text{rap}(\text{acti}))}{f(\text{rap}(\text{acti}))}\right)$$

## Revendications

**1.** Dispositif de régulation de débit conjointe à au moins deux composantes de signaux vidéo numériques, comprenant un circuit de transformation orthogonale (10) qui reçoit lesdits signaux numériques représentatifs d'un certain nombre de points d'une image divisée en blocs, un circuit de conversion de balayage (30) qui transforme la suite bidimensionnelle des valeurs des coefficients $F_i(u,v)$ de sortie du circuit de transformation orthogonale en une suite monodimensionnelle, un circuit de normalisation (40), un circuit (50) de quantification par conversion en une valeur entière, un circuit (60) de codage des valeurs quantifiées, et une mémoire-tampon (70) qui reçoit selon un débit variable les valeurs codées et, d'une part, renvoie une valeur de norme moyenne liée audit débit vers le circuit de normalisation, d'autre part délivre des valeurs à débit constant sur la sortie du dispositif de régulation, un circuit à retard étant éventuellement prévu par exemple entre lesdits circuits de transformation orthogonale et de conversion de balayage, caractérisé en ce que ledit circuit de normalisation (40) comprend lui-même :

(a) un circuit (401) de calcul du rapport rap(acti) entre l'activité d'une première composante notée $P_1$ et l'activité d'une deuxième composante notée $P_2$, l'activité étant une grandeur égale, pour chaque composante, à la somme des coefficients obtenus dans la suite monodimensionnelle, exception faite du premier coefficient, et cette grandeur étant calculée pour chaque composante par connexion de l'entrée dudit circuit de calcul de rap(acti) en sortie du circuit de conversion de balayage (30) ou du circuit de quantification (50) ;

(b) un circuit (402) de calcul, à partir de rap(acti), du rapport rap(norme) entre la norme de régulation de débit relative à la deuxième composante et celle relative à la première composante, chacune desdites normes étant inversement proportionnelle au débit selon des relations norme x débit = K où K est une constante ;

(c) un circuit (404) de calcul, selon les formules suivantes :

$$\text{norme } (P_1) = \frac{1 + \text{rap}(\text{norme})}{\text{rap}(\text{norme})} \text{ x norme globale}$$

norme ($P_2$) = (1 + rap(norme)) x norme globale

norme globale x débit global = K,

des normes spécifiques norme ($P_1$) et norme ($P_2$) relatives respectivement à la première composante et à la deuxième composante, recevant d'une part ladite valeur de rap(norme) et d'autre part une valeur de norme globale délivrée par un circuit de calcul de norme globale (406) ;
(d) un compteur (407) du nombre d'éléments binaires présents dans la mémoire-tampon (70) pour le bloc courant en cours de traitement ;
(e) une mémoire auxiliaire (408) de stockage temporaire dudit nombre d'éléments binaires ;
(f) un soustracteur (409) déterminant avec son signe la différence du nombre d'éléments binaires entre l'entrée et la sortie de ladite mémoire auxiliaire ;
(g) le circuit (406) de calcul de norme globale, recevant d'une part la sortie dudit soustracteur (409) et d'autre part la sortie du compteur (407) et délivrant une valeur de norme globale telle que définie en (c) et destinée à l'une des entrées du circuit (404) de calcul de normes spécifiques ;
(h) un diviseur (405) de la sortie du circuit de conversion de balayage (30) par la sortie dudit circuit (404) de calcul de normes spécifiques, la sortie de ce diviseur constituant la sortie du circuit de normalisation (40) fournie au circuit de quantification (50).

**2.** Dispositif selon la revendication 1, caractérisé en ce que les première et deuxième composantes sont les signaux de différence de couleur qui constituent la composante de chrominance d'un signal de télévision.

**3.** Dispositif selon la revendication 1, caractérisé en ce que les première et deuxième composantes sont les composantes de luminance et de chrominance d'un signal de télévision.

**4.** Dispositif selon l'une des revendications 2 et 3, caractérisé en ce qu'il comprend, entre la sortie du circuit de calcul de rap(norme) (402) et l'entrée correspondante du circuit de calcul des normes spécifiques (404), un circuit (403) de filtrage récursif passe-bas de la norme.

**5.** Système de transmission d'images de télévision par l'intermédiaire d'un canal impliquant un traitement de réduction de la quantité d'informations à transmettre, ce système comprenant au moins un étage d'émission et un étage de réception, caractérisé en ce que ledit étage d'émission comprend un dispositif de régulation de débit selon l'une des revendications 2 à 4.

**6.** Etage de réception pour un système de transmission selon la revendication 5, comprenant une mémoire-tampon (170) qui reçoit des signaux d'entrée à débit constant et délivre des signaux à débit variable, un circuit (160) de décodage de ces signaux, un circuit (150) de quantification inverse des signaux décodés, un circuit de normalisation inverse (140), un circuit de conversion de balayage (130), et un circuit de transformation orthogonale inverse (110), un circuit à retard (120) étant éventuellement prévu par exemple entre lesdits circuits de conversion de balayage (130) et de transformation orthogonale inverse (110), caractérisé en ce que ledit circuit de normalisation inverse (140) comprend lui-même :
(a) un circuit (501) de calcul du rapport rap(acti) entre l'activité de la première composante et l'activité de la deuxième composante, ces valeurs d'activité étant calculées pour chaque composante pour constituer l'entrée dudit circuit de calcul de rap(acti) par prélèvement soit de l'entrée du circuit de conversion de balayage (130), soit de l'entrée du circuit de quantification inverse (150) ;
(b) un circuit (502) de calcul, à partir de rap(acti), du rapport rap(norme) entre la norme de régulation de débit relative à la deuxième composante et celle relative à la première composante, chacune desdites normes étant inversement proportionnelle au débit selon des relations norme x débit = K où K est une constante ;
(c) un circuit (504) de calcul, selon les formules suivantes :

$$\text{norme } (P_1) = \frac{1 + \text{rap(norme)}}{\text{rap(norme)}} \times \text{norme globale}$$

norme ($P_2$) = (1 + rap(norme)) x norme globale
norme globale x débit global = K,

des normes spécifiques norme ($P_1$) et norme ($P_2$) relatives respectivement à la première composante et à la deuxième composante, recevant d'une part ladite valeur de rap(norme) et d'autre part une valeur de norme globale délivrée par un circuit de calcul de norme globale (506) ;
(d) un compteur (507) du nombre d'éléments binaires présents dans la mémoire-tampon (170) pour le bloc courant en cours de traitement ;
(e) une mémoire auxiliaire (508) de stockage temporaire dudit nombre d'éléments binaires ;
(f) un soustracteur (509) déterminant avec son signe la différence du nombre d'éléments binaires entre l'entrée et la sortie de ladite mémoire auxiliaire ;
(g) le circuit (506) de calcul de norme globale, recevant d'une part la sortie dudit soustracteur (509) et d'autre part la sortie du compteur (507) et délivrant une valeur de norme globale telle que définie en (c) et destinée à l'une des entrées du circuit (504) de calcul de normes spécifiques ;
(h) un multiplicateur (505) de la sortie du circuit (150) de quantification inverse par la sortie dudit circuit (504) de calcul de normes spécifiques, la sortie de ce multiplicateur constituant la sortie du circuit de normalisation (40) fournie au circuit de conversion de balayage (130).

**7.** Dispositif selon la revendication 6, caractérisé en ce qu'il comprend, entre la sortie du circuit (502) de calcul de rap(norme) et l'entrée correspondante du circuit (504) de calcul des normes spécifiques, un circuit (503) de filtrage récursif passe-bas de la norme.

## Claims

**1.** A device for the joint bit rate control of at least two digital video signal components, comprising an orthogonal transform circuit (10) which receives said digital signals representing a certain number of pixels of an image divided into blocks, a scanning conversion circuit (30) which converts the two-dimensional sequence of the values of the output coefficients $F_i(u,v)$ of the orthogonal transform circuit into a one-dimensional sequence, a normalisation circuit (40), a circuit (50) for quantization by conversion into a integral value, a circuit (60) for encoding the quantized values, and a buffer memory (70) which receives the encoded values at a variable bit rate and, on the one hand, transmits an average norm value associated with said bit rate to the normalisation circuit, and on the other hand, delivers values at the constant bit rate to the output of the control device, a delay circuit being possibly arranged, for example, between said orthogonal transform circuit and said scanning conversion circuit, characterized in that said normalisation circuit (40) comprises:
(a) a circuit (401) for computing the ratio rap(acti) between the activity of a first component $P_1$ and the activity of a second component $P_2$, the activity being a quantity which for each component is equal to the sum of the coefficients obtained in the one-dimensional sequence, except for the first coefficient, and this quantity being computed for each component by connection of the input of said circuit for computing rap(acti) to the output of the scanning conversion circuit (30) or of the quantization circuit (50);
(b) a circuit (402) for computing on the basis of rap(acti) the ratio rap(norm) between the bit rate control norm relating to the second component and that relating to the first component, each of said norms being inversely proportional to the bit rate in accordance with the relations:
norm x bit rate = K, where K is a constant;
(c) a circuit (404) for computing the specific norms ($P_1$) and norm ($P_2$) in accordance with the following formulas:

$$\text{norm } (P_1) = \frac{1+rap(norm)}{rap(norm)}\ x\ global\ norm;$$

norm ($P_2$) = (1 + rap(norm)) x global norm;
global norm x global bit rate = K;

which norms relate to the first component and to the second component, respectively, receiving, on the one hand, said rap(norm) value and, on the other hand, a global norm value delivered by a circuit (406) for computing the global norm;
(d) a counter of the number of binary elements present in the bit rate control circuit for the current block in the course of processing;
(e) an auxiliary memory for temporary storage of the said number of binary elements;

(f) a subtracter determining by its sign the difference of the number of binary elements between the input and the output of said auxiliary memory;
(g) the global norm computation circuit, receiving, on the one had, the output of the said subtracter and, on the other hand, the output of the counter and delivering a global norm value intended for one of the inputs of the circuit for the computation of specific norms;
(h) a divider of the output of the scanning conversion circuit by the output of said specific norm computation circuit, the output of said divider constituting the output of the normalisation circuit applied to the quantization circuit.

**2.** A device as claimed in Claim 1, characterized in that the first and second components are the colour difference signals which constitute the chrominance component of a television signal.

**3.** A device as claimed in Claim 1, characterized in that the first and second components are the luminance and chrominance components of a television signal.

**4.** A device as claimed in any one of Claims 2 and 3, characterized in that it comprises a circuit (403) for low-pass recursive filtering of the norm between the output of the circuit (402) for computing the rap-(norm) and the corresponding input of the circuit (404) for computing the specific norms.

**5.** A system for transmitting television images via a channel involving a processing operation of reducing the quantity of information components to be transmitted, said system comprising at least one transmitter stage and one receiver stage, characterized in that said transmitter stage comprises a bit rate control device as claimed in any one of Claims 2 to 4.

**6.** A receiver stage for a transmission system as claimed in Claim 5, comprising a buffer memory (170) receiving input signals at a constant bit rate and supplying signals at a variable bit rate, a circuit (160) for decoding said signals, a circuit (150) for inverse quantization of the decoded signals, a inverse normalization circuit (140), a scanning conversion circuit (130) and a inverse orthogonal transform circuit (110), a delay circuit (120) being possibly arranged, for example, between said scanning conversion circuit (130) and said inverse orthogonal transform circuit (110), characterized in that said inverse normalization circuit (140) comprises:
(a) a circuit (501) for computing the ratio rap(acti) between the activity of the first component and the activity of the second component, said activity values being computed for each component for constituting the input of said circuit for computing rap(acti) by taking either the input of the scanning conversion circuit (130) or the input of the inverse quantization circuit (150);
(b) a circuit (502) for computing on the basis of rap(acti) the ratio rap(norm) between the bit rate control norm relating to the second component and that relating to the first component, each of said norms being inversely proportional to the bit rate in accordance with the relations norm x bit rate = K, where K is a constant;
(c) a circuit (504) for computing the specific norm ($P_1$) and norm ($P_2$) in accordance with the following formulas:

$$\text{norm } (P_1) = \frac{1 + rap(norm)}{rap(norm)} \; x \; global \; norm;$$

norm ($P_2$) = (1 + rap(norm)) x global norm;
global norm x global bit rate = K,

which norms relate to the first component and to the second component, respectively, receiving, on the one hand, said rap(norm) value and, on the other hand, a global norm value delivered by a circuit (506) for computing the global norm;
(d) a counter (507) of the number of binary elements present in the buffer memory (170) for the current block in the course of processing;
(e) an auxiliary memory (508) for temporarily storing said number of binary elements;
(f) a subtracter (509) determining by its sign the difference of the number of binary elements between the input and the output of said auxiliary memory;

(g) the global norm computation circuit (506), receiving, on the one had, the output of said subtracter (509) and, on the other hand, the output of the counter (507) and delivering a global norm value as defined in (c) and intended for one of the inputs of the circuit (504) for computing specific norms;
(h) a multiplier (505) of the output of the inverse quantization circuit (150) by the output of said specific norm computation circuit (504), the output of said multiplier constituting the output of the normalization circuit (40) applied to the scanning conversion circuit (130).

**7.** A device as claimed in Claim 6, characterized in that it comprises a circuit (503) for low-pass recursive filtering of the norm between the output of the rap(norm) computation circuit (502) and the corresponding input of the specific norm computation circuit (504).

**Patentansprüche**

**1.** Anordnung zur gemeinsamen Bitratensteuerung mindestens zweier digitaler Video-Signalkomponenten mit einem Orthogonaltransformationskreis (10), der die genannten digitalen Signale erhält, die für eine bestimmte Anzahl Punkte eines in Blöcke aufgeteilten Bildes repräsentativ sind, mit einem Abtastumwandlungskreis (30), der die zweidimensionale Folge der Werte der Ausgangskoeffizienten $F_i(u,v)$ des Orthogonaltransformationskreises in eine eindimensionale Folge umwandelt, mit einem Normalisierungskreis (40), einem Quantisierungskreis (50) zum Quantisieren durch Umwandlung in einen ganzen Wert, einem Kreis (60) zum Codieren der quantisierten Werte, und mit einem Pufferspeicher (70), der mit einer veränderlichen Bitrate die codierten Werte erhält und, einerseits einen in der Bitrate liegenden mittleren Normwert zu dem Normalisierungskreis sendet und andererseits Werte konstanter Bitrate an dem Ausgang des Steuerkreises liefert, wobei ggf. zwischen dem genannten Orthogonaltransformationskreis und dem genannten Abtastumwandlungskreis ein Verzögerungskreis vorgesehen ist, dadurch gekennzeichnet, daß der genannte Normalisierungskreis (40) an sich die nachfolgenden Elemente aufweist:
(a) eine Schaltung (401) zum Berechnen des Verhältnisses "rap(acti)" zwischen der Aktivität eines ersten Komponents $P_1$ und der Aktivität eines zweiten Komponents $P_2$, wobei die Aktivität für jeden Komponent eine Größe ist, die der Summe der in der eindimensionalen Folge erhaltenen Koeffizienten entspricht, mit Ausnahme des ersten Koeffizienten, und wobei diese Größe für jeden Komponent dadurch berechnet wird, daß der Eingang der genannten Schaltung zum Berechnen von "rap(acti)" mit dem Ausgang des Abtastumwandlungskreises (30) oder des Quantisierungskreises (50) verbunden wird;
(b) eine Rechenschaltung (402) zum auf Basis von "rap(acti)" Berechnen des Verhältnisses "rap(norm)" zwischen der Bitratensteuernorm des zweiten Komponents und der des ersten Komponents, wobei jede der genannten Normen zu der Bitrate umgekehrt proportional ist entsprechend den Beziehungen:
Norm x Bitrate = K, wobei K eine Konstante ist;
(c) eine Schaltung zum Berechnen der spezifischen Normen ($P_1$) und ($P_2$) entsprechend den nachfolgenden Formeln:

$$\text{Norm}(P_1) = \frac{1+\text{rap(norm)}}{\text{rap(norm)}} \times \text{Gesamtnorm};$$

Norm ($P_2$) = (1 + rap(norm)) x Gesamtnorm;
Gesamtnorm x Gesamtbitrate = K,

wobei diese Normen dem ersten bzw. zweiten Komponent zugeordnet sind, die einerseits den genannten "rap(norm)"-Wert erhält und andererseits einen Gesamtnorm-Wert von einem Gesamtnorm-Rechenkreis (406);
(d) einen Zähler (407) zum Zählen der Anzahl binärer Elemente in dem Pufferspeicher (70) für den betreffenden in der Behandlung begriffenen Block;
(e) einen Hilfsspeicher (408) zur vorübergehenden Speicherung der genannten Anzahl binärer Elemente;
(f) einen Subtrahierer (409), der durch das Vorzeichen die Differenz der Anzahl binärer Elemente zwischen dem Eingang und dem Ausgang des genannten Hilfsspeichers bestimmt;

(g) den Gesamtnorm-Rechenkreis (406), der einerseits das Ausgangssignal des genannten Subtrahierers (409) und andererseits das Ausgangssignal des Zählers (407) erhält, und der einen Gesamtnorm-Wert, wie in (c) definiert, liefert, der für einen der Eingänge der Schaltung (404) zum Berechnen spezifischer Normen gemeint ist;
(h) einen Teiler (405) zum Teilen des Ausgangssignals des Abtastumwandlungskreises (30) durch das Ausgangssignal der Schaltung (404) zum Berechnen der genannten spezifischen Normen, wobei das Ausgangssignal dieses Teilers das Ausgangssignal des dem Quantisierungskreis (50) zugeordneten Normalisierungskreises (40) bildet.

**2.** Anordnung nach Anspruch 1, dadurch gekennzeichnet, daß der erste und der zweite Komponent die Farbdifferenzsignale sind, die den Farbartanteil eines Fernsehsignals bilden.

**3.** Anordnung nach Anspruch 1, dadurch gekennzeichnet, daß der erste und der zweite Komponent der Leuchtdichte- und der Farbartanteil eines Fernsehsignals sind.

**4.** Anordnung nach Anspruch 2 und 3, dadurch gekennzeichnet, daß sie zwischen dem Ausgang der Rechenschaltung (402) zum Berechnen von "rap(norm)" und dem entsprechenden Eingang der Schaltung (404) zum Berechnen der spezifischen Normen eine Norm-Tiefpaß-Rekursivfilterschaltung (403) aufweist.

**5.** Fernsehbildübertragungssystem zum Übertragen über nur einen Kanal mit einer Behandlung zur Verringerung der zu übertragenden Informationsmenge, wobei dieses System mindestens eine Sendestufe und eine Empfangsstufe aufweist, dadurch gekennzeichnet, daß die genannte Sendestufe eine Anordnung zur Steuerung der Bitrate nach einem der Ansprüche 2 bis 4 aufweist.

**6.** Empfangsstufe für ein Übertragungssystem nach Anspruch 5 mit einem Pufferspeicher (170), der Eingangssignale konstanter Bitrate erhält und Signale veränderlicher Bitrate liefert, einem Kreis (160) zum Decodieren dieser Signale, einem Kreis (150) zur inversen Quantisierung der decodierten Signale, einem Kreis zur inversen Normalisierung (140), einem Abtastumwandlungskreis (130), und einem inversen Orthogonaltransformationskreis (110), und einem ggf. zwischen dem genannten Abtastumwandlungskreis (130) und dem inversen Orthogonaltransformationskreis (110) vorgesehenen Verzögerungskreis (120), dadurch gekennzeichnet, daß der genannte Kreis zum inversen Normalisierung (140) an sich die nachfolgenden Elemente aufweist:
(a) eine Rechenschaltung (501) zum Berechnen des Verhältnisses "rap(acti)" zwischen der Aktivität des ersten Komponents und der Aktivität des zweiten Komponents, wobei diese Aktivitätenwerte für jeden Komponent berechnet werden zum Bilden des Eingangssignals der genannten Schaltung zum Berechnen von "rap(acti)" dadurch, daß entweder das Eingangssignal des Abtastumwandlungskreises (130) oder das Eingagssignal des Kreises zur inversen Quantisierung (150) genommen wird;
(b) eine Rechenschaltung (502) zum auf Basis von "rap(acti)" Berechnen des Verhältnisses "rap(norm)" zwischen der Bitratensteuernorm des zweiten Komponents und der des ersten Komponents, wobei jede der genannten Normen zu der Bitrate umgekehrt proportional ist entsprechend den Beziehungen:
Norm x Bitrate = K, wobei K eine Konstante ist;
(c) eine Rechenschaltung (504) zum Berechnen der spezifischen Normen ($P_1$) und ($P_2$) entsprechend den nachfolgenden Formeln:

$$\text{Norm } (P_1) = \frac{1+\text{rap(norm)}}{\text{rap(norm)}} \text{ x Gesamtnorm};$$

Norm ($P_2$) = (1 + rap(norm)) x Gesamtnorm;
Gesamtnorm x Gesamt-Bitrate = K,

wobei diese Normen dem ersten bzw. zweiten Komponent zugeordnet sind, die einerseits den genannten "rap(norm)"-Wert erhält und andererseits einen Gesamtnorm-Wert von einem Gesamtnorm-Rechenkreis (506);

(d) einen Zähler (507) zum Zählen der Anzahl binärer Elemente in dem Pufferspeicher (170) für den betreffenden in der Behandlung begriffenen Block;
(e) einen Hilfsspeicher (508) zur vorübergehenden Speicherung der genannten Anzahl binärer Elemente;
(f) einen Subtrahierer (509), der durch das Vorzeichen die Differenz der Anzahl binärer Elemente zwischen dem Eingang und dem Ausgang des genannten Hilfsspeichers bestimmt;
(g) den Gesamtnorm-Rechenkreis (506), der einerseits das Ausgangssignal des genannten Subtrahierers (509) erhält und andererseits das Ausgangssignal des Zählers (507), und der einen Gesamtnorm-Wert, wie in (c) definiert, liefert, der für einen der Eingänge der Schaltung (504) zum Berechnen spezifischer Normen gemeint ist;
(h) einen Multiplizierer (505) zum Multiplizieren des Ausgangssignals des Kreises zur inversen Quantisierung (150) mit dem Ausgangssignal der Schaltung (504) zum Berechnen der spezifischen Normen, wobei das Ausgangssignal dieses Multiplizierers das Ausgangssignal des dem Abtastumwandlungskreis (130) zugeordneten Normalisierungskreises (40) bildet.

**7.** Anordnung nach Anspruch 6, dadurch gekennzeichnet, daß sie zwischen dem Ausgang der Schaltung (502) zum Berechnen von "rap(norm)" und dem entsprechenden Eingang der Schaltung (504) zum Berechnen der spezifischen Normen ein Norm-Tiefpaß-Rekursivfilterkreis (503) aufweist.

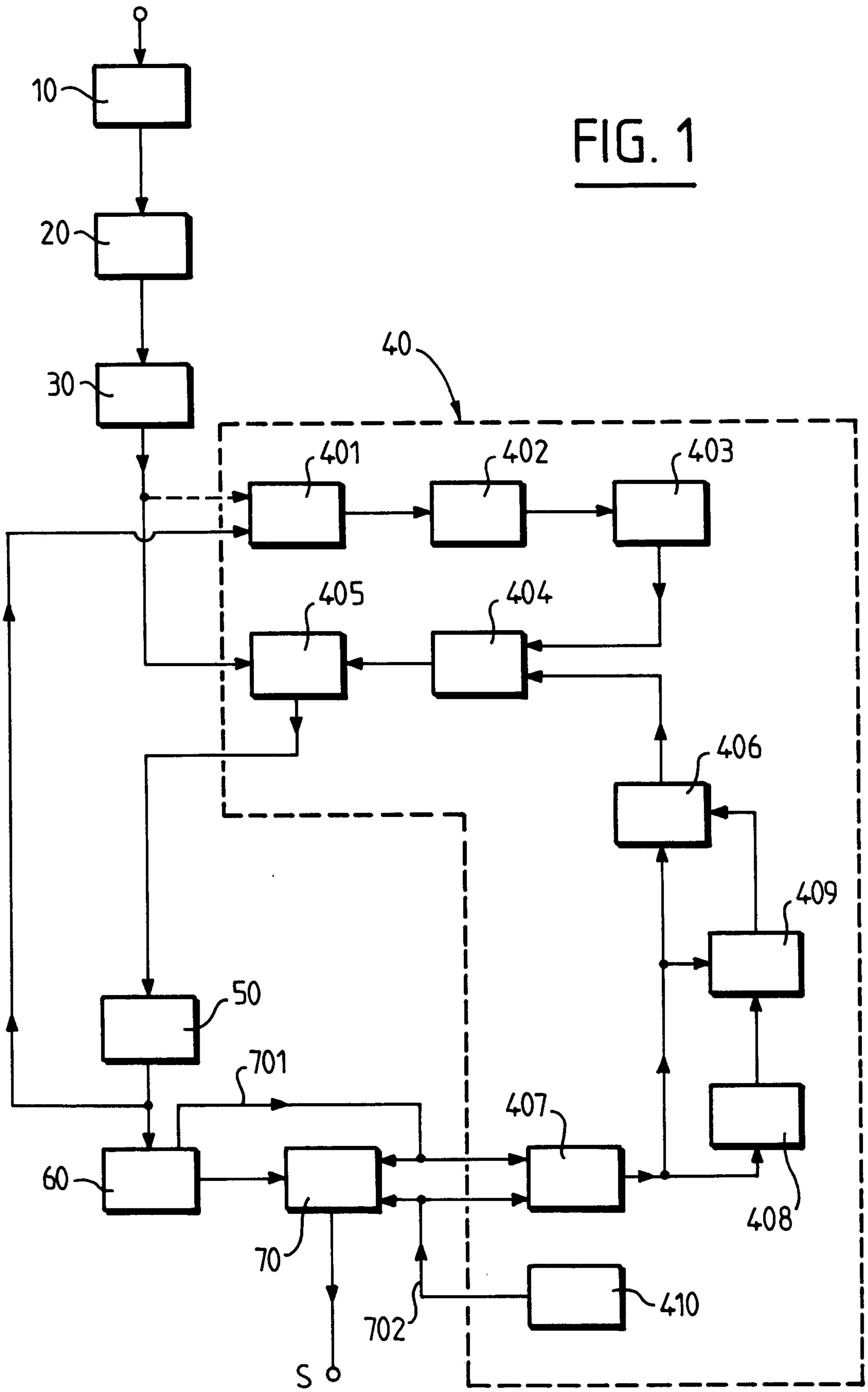
10
20
30
40
401
402
403
405
404
406
409
50
701
407
60
70
408
410
702
S

FIG. 1

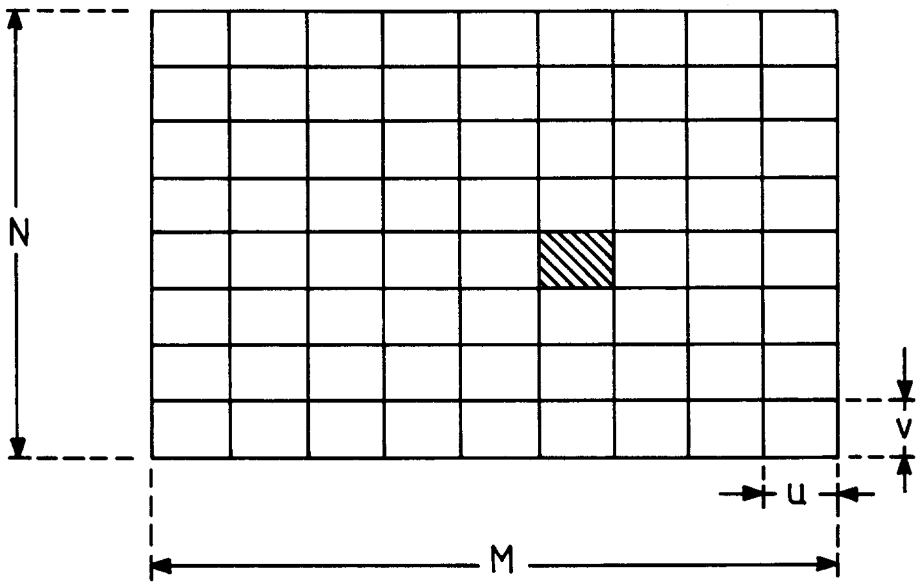


FIG. 2a

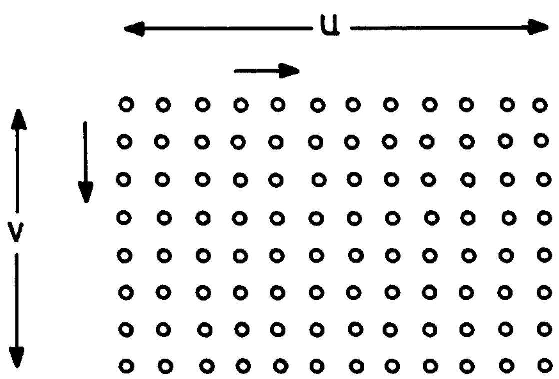


FIG. 2b

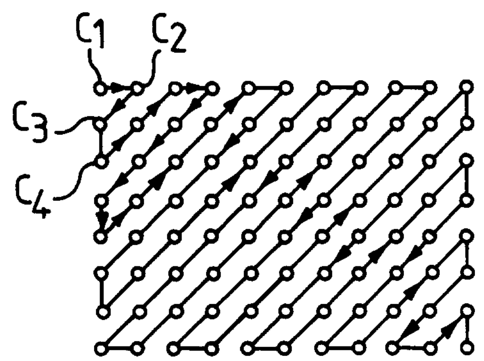


FIG. 2c

FIG. 3

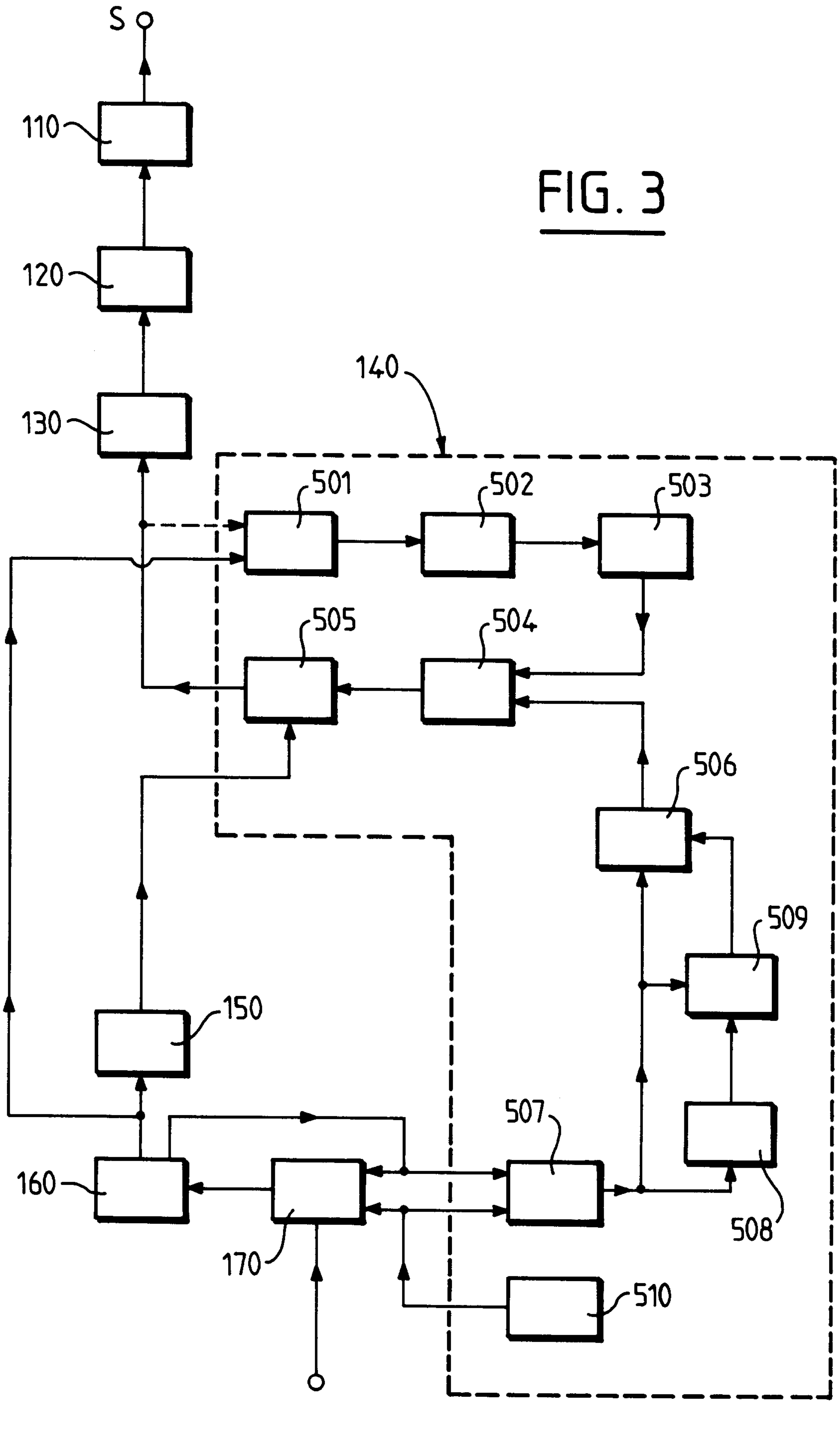
S
110
120
130
140
501
502
503
505
504
506
509
150
507
160
170
508
510